# EUROPEAN PATENT SPECIFICATION

(11) **EP 4 061 508 B1**
(45) Date of publication and mention of the grant of the patent: **13.12.2023**
(21) Application number: 20828304.4
(22) Date of filing: 18.11.2020
(51) Int. Cl.: B01D 53/50, H01M 8/0662, H01M 8/1246, H02K 5/20, F16B 7/18, F16B 37/12

(54) **DESULFURIZATION UNIT, SOFC SYSTEM AND VEHICLE**
ENTSCHWEFELUNGSEINHEIT, SOFC-SYSTEM UND FAHRZEUG
UNITÉ DE DÉSULFURATION, SYSTÈME À SOFC ET VÉHICULE

(30) Priority: 19.11.2019 CN 201921999676 U
(43) Date of publication of application: 28.09.2022
(73) Proprietor: Ceres Intellectual Property Company Limited, West Sussex RH13 5PX (GB)
(72) Inventor: CHEN, Songtao, Weifang, Shandong 261061 (CN); CHEN, Wenmiao, Weifang, Shandong 261061 (CN); YU, Chao, Weifang, Shandong 261061 (CN)
(74) Representative: Wynne-Jones IP Limited
(86) International application number: PCT/IB2020/060861
(87) International publication number: WO 2021/099958

(56) References cited:
- WO-A1-2012/099067
- WO-A1-2012/132997
- WO-A2-2010/026875
- CN-U- 204 638 201
- CN-U- 207 672 008
- JP-A- 2015 229 742

## Description

### TECHNICAL FIELD

The present invention relates to the technical field of fuel cells and more specifically, relates to a desulfurization unit, an SOFC system and a vehicle.

### BACKGROUND ART

A solid oxide fuel cell (SOFC) system is a fuel cell using solid oxide as an electrolyte and working at high temperature. In a fuel gas system of the SOFC system, the desulfurization unit is a necessary unit, while a conventional desulfurization unit generally is only a container storing a desulfurizing agent or a container integrated with a filter.

In a conventional fuel gas system, the temperature of the desulfurizing agent is maintained mainly by the temperature of natural gas. This temperature is obtained by heating the natural gas through a thermal cycle of a pressure reducing valve and a heat exchanger. This method requires the system to work for a long time in a low temperature environment to reach the temperature required by the desulfurizing agent and shows a low heat exchange efficiency of the desulfurization unit. Moreover, the desulfurization unit in the prior art is large in size and takes up a large space, which is inconvenient for the installation and subsequent maintenance of the unit and the replacement of the desulfurizing agent.

JP 2015 229742 A discloses a desulfurization unit of a solid oxide fuel cell of a vehicle, comprising a container for holding a desulfurizing agent with inner and outer wall, a cavity formed between the two walls, and an inlet for raw fuel gas and a port.

The slow temperature rise of the desulfurizing agent in the desulfurization unit of the SOFC system is a problem.

### SUMMARY OF THE INVENTION

A first object of the present invention is to provide a desulfurization unit of an SOFC system. The structural design of the desulfurization unit of the SOFC system can effectively solve the problem of slow temperature rise of the desulfurizing agent in the desulfurization unit of the SOFC system. A second object of the present invention is to provide an SOFC system and a vehicle comprising the foregoing desulfurization unit.

A first aspect of the invention provides a desulfurization unit of an SOFC system, comprising:
a container for holding desulfurizing agent, wherein the container comprises an inner wall and an outer wall, a water cavity is formed between the inner wall and the outer wall, a water inlet and a water outlet in communication with the water cavity are arranged on the outer wall, the top of the container is provided with a gas outlet and the bottom of the container is provided with a gas inlet; and
a double threaded bush arranged at the gas outlet, wherein the double threaded bush comprises an inner bush and an outer bush that adopt a threaded connection, the outer wall of the outer bush is connected to the hole wall of the gas outlet in a threaded manner, and the inner wall of the inner bush is connected to an adapter in a threaded manner.

The bottom of the container can be provided with a grid plate, a buffer cavity is arranged under the grid plate, and the gas entering from the gas inlet flows through the buffer cavity and the grid plate in turn.

At least one circumferential locating pin can be further provided between the outer bush and the hole wall of the gas outlet.

The container can be rectangular.

The water inlet and the water outlet can be located in the upper part and the lower part of the container respectively.

The adapter can be a right-angle adapter. A filter element can be further integrated on the right-angle connector.

A second aspect of the invention provides an SOFC system comprising at least one of the desulfurization units. The SOFC system can comprise a plurality of the desulfurization units, in which any two of the desulfurization units are connected in series or parallel.

A third aspect of the invention provides vehicle comprising the SOFC system.

The desulfurization unit of an SOFC system provided by the present model comprises a container and a double threaded bush. An inner cavity of the container is used for holding a desulfurizing agent. The container comprises an inner wall and an outer wall, a water cavity is formed between the inner wall and the outer wall, and a water inlet and a water outlet in communication with the water cavity are arranged on the outer wall. In other words, circulating water can enter the water cavity from the water inlet, circulate inside the water cavity and then be discharged out of the water cavity from the water outlet. The inner cavity is a cavity on the inner side of the inner wall. The desulfurizing agent is kept in the inner cavity.

The top of the container is provided with a gas outlet, which communicates with the inner cavity. The bottom of the container is provided with a gas inlet, which also communicates with the inner cavity. Gas enters the inner cavity from the gas inlet, is desulfurized by the desulfurizing agent and then is discharged from the gas outlet.

A double threaded bush is arranged at the gas outlet. The double threaded bush comprises an inner bush and an outer bush that adopt a nested setting, and threaded connection is adopted between the inner bush and the outer bush, i.e., the outer wall of the inner bush is in screw-thread fit with the inner wall of the outer bush. The outer wall of the outer bush is connected to the hole wall of the gas outlet in a threaded manner, and the inner wall of the inner bush is connected to the adapter in a threaded manner.

When the desulfurization unit of the SOFC system provided by the present invention is used, the water inlet and water outlet are communicable with the circulating water of the whole vehicle, and the circulating water of the whole vehicle enters the water cavity from the water inlet, circulates in the water cavity and then is discharged out of the water cavity from the water outlet. Further, the circulating water of the whole vehicle heats the desulfurizing agent in the water cavity. In this way, the desulfurizing agent can be heated up once the vehicle is started, and the temperature of the desulfurizing agent can be quickly raised to the operating ambient temperature. This effect is better than a conventional method of heating by gas.

Further, the connection with a double threaded bush has good sealing performance. When the desulfurizing agent needs to be replaced, the outer bush and inner bush can be rotated and disassembled together. The diameter of the outer bush is larger to facilitate the rapid outflow or inflow of the desulfurizing agent. To replace the adapter, only rotation of the adapter and the inner bush is needed. This design is not only conducive to frequent adapter replacement without damaging the container, but also conducive to adopting a larger diameter to speed up the replacement of the desulfurizing agent.

The present invention further provides an SOFC system and a vehicle. The SOFC system and the vehicle comprise any of the foregoing desulfurization units. As the foregoing desulfurization units have the above-mentioned technical effects, the SOFC system and the vehicle comprising the desulfurization unit should also have the corresponding technical effects.

### BRIEF DESCRIPTION OF THE DRAWINGS

The following briefly describes the accompanying drawings. The accompanying drawings in the following description show some embodiments of the present invention.
Fig. 1 is a section view of a desulfurization unit.
Fig. 2 is a structural schematic view of a double threaded bush.
Fig. 3 is a structural schematic view of a right-angle adapter.
Fig. 4 is a schematic view of two cascading desulfurization units.

The following reference numerals are used in the description and drawings: 1-right-angle adapter, 1a-filter element, 2-circumferential locating pin, 3-double threaded bush, 3a-outer bush, 3b-inner bush, 4-water cavity, 5-container, 6-inner cavity, 7-grid plate, 8-circulating water ferrule-type joint, 9-straight adapter.

### DETAILED DESCRIPTION

An object of the present invention is to provide a desulfurization unit of an SOFC system. The structural design of the desulfurization unit of the SOFC system can help solve the problem of slow temperature rise of the desulfurizing agent in the desulfurization unit of the SOFC system. A further object of the present invention is to provide an SOFC system and a vehicle comprising the foregoing desulfurization unit.

Embodiments of the present invention will be described below in conjunction with the drawings. The described embodiments are only some, not all of the embodiments of the present invention.

In the description of the present invention, it should be understood that terms indicating directional or positional relations such as "over," "on," "above," "below," "under," "front," "rear," "left" and "right" are based on the directional or positional relations shown in the drawings. They are only for facilitating and simplifying the description of the present invention, and do not indicate or imply that the devices or elements in question must possess specific directions or be constructed and operated in specific directions, so they cannot be understood as limitations to this solution. Further, the terms "first" and "second" are intended for description only and cannot be understood to indicate or imply relative importance or implicitly indicate the quantity of the demonstrated technical features.

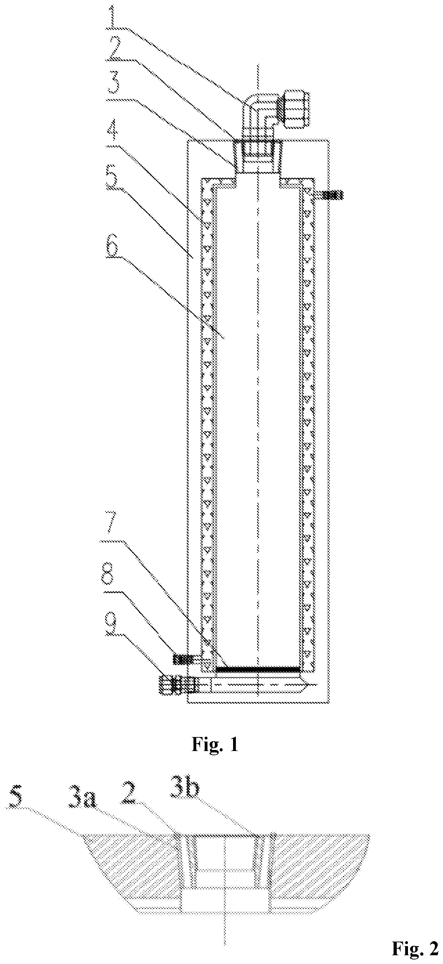

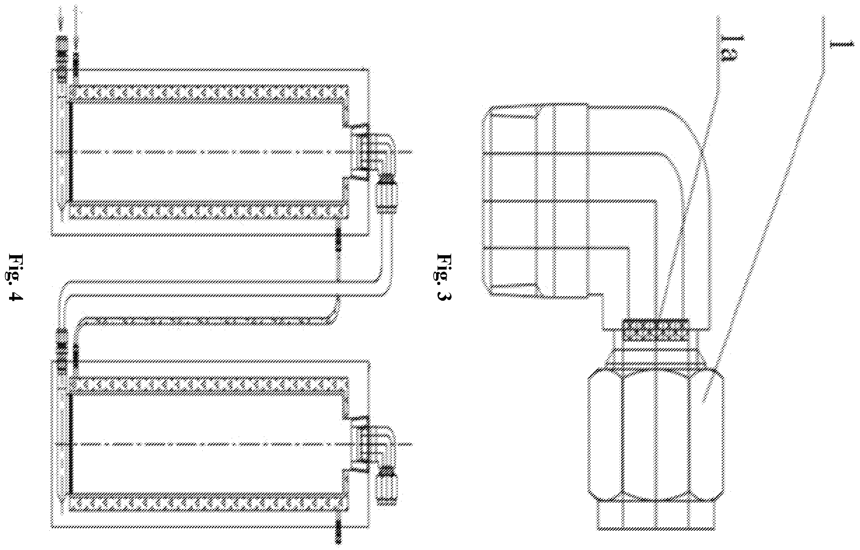

As shown in Fig. 1 to Fig. 4, the desulfurization unit of the SOFC system provided by the present invention comprises a container 5 and a double threaded bush 3. An inner cavity 6 of the container 5 is used for holding a desulfurizing agent. The container 5 comprises an inner wall and an outer wall, a water cavity 4 is formed between the inner wall and the outer wall, and a water inlet and a water outlet in communication with the water cavity 4 are arranged on the outer wall. In other words, circulating water can enter the water cavity 4 from the water inlet, circulate inside the water cavity 4 and then be discharged out of the water cavity 4 from the water outlet. The inner cavity 6 is a cavity on the inner side of the inner wall. The desulfurizing agent is kept in the inner cavity 6.

The top of the container 5 is provided with a gas outlet, which communicates with the inner cavity 6. The bottom of the container 5 is provided with a gas inlet, which also communicates with the inner cavity 6. Gas enters the inner cavity 6 from the gas inlet, is desulfurized by the desulfurizing agent and then is discharged from the gas outlet.

A double threaded bush 3 is arranged at the gas outlet. The double threaded bush 3 comprises an inner bush 3b and an outer bush 3a that adopt a nested setting, and threaded connection is adopted between the inner bush 3b and the outer bush 3a, i.e., the outer wall of the inner bush 3b is in screw-thread fit with the inner wall of the outer bush 3a. The outer wall of the outer bush 3a is connected to the hole wall of the gas outlet in a threaded manner, and the inner wall of the inner bush 3b is connected to the adapter in a threaded manner.

When the desulfurization unit of the SOFC system provided by the present invention is used, the water inlet and the water outlet are communicable with the circulating water of the whole vehicle, and the circulating water of the whole vehicle enters the water cavity 4 from the water inlet, is circulated in the water cavity 4 and then is discharged out of the water cavity 4 from the water outlet. Further, the circulating water of the whole vehicle heats the desulfurizing agent in the water cavity 4. In this way, the desulfurizing agent can be heated up once the vehicle is started, and the temperature of the desulfurizing agent can be quickly raised to the operating ambient temperature. This effect is better than a conventional method of heating by gas.

Further, the connection with a double threaded bush has good sealing performance. When the desulfurizing agent needs to be replaced, the outer bush 3a and inner bush 3b can be rotated and disassembled together. The diameter of the outer bush 3a is larger to facilitate the rapid outflow or inflow of the desulfurizing agent. To replace the adapter, only rotation of the adapter and the inner bush 3b is needed. This design is not only conducive to frequent adapter replacement without damaging the container 5, but also conducive to adopting a larger diameter to speed up the replacement of the desulfurizing agent.

In order to make the distribution of a turbulent gas more uniform, the bottom of the container 5 can be further provided with a grid plate 7. A buffer cavity is arranged under the grid plate 7 and the gas entering from the gas inlet flows through the buffer cavity and the grid plate 7 in turn. With this setting, the grid plate 7 can support the desulfurizing agent and moreover, after the turbulent gas under the grid plate 7 flows through the grid plate 7, the gas is more uniformly distributed. A plurality of round through holes or through holes in other shapes can be arranged on the grid plate 7. The grid plate 7 can be a grid plate 7 densely perforated by lasers.

In order to prevent the outer bush 3a from rotating together with the inner bush 3b during disassembly or installation of the adapter, at least one circumferential locating pin 2 can be arranged between the outer bush 3a and the hole wall of the gas outlet. The circumferential locating pin 2 can prevent rotation of the outer bush 3a. To replace the desulfurizing agent, only removal of the circumferential locating pin 2 and rotation of the outer bush 3a are needed.

The circumferential locating pin 2 can pass through a pin hole on the outer bush 3a and be inserted into the pin hole on the hole wall of the gas outlet.

The container 5 can be rectangular. The desulfurization units can be used alone, and a single unit has a small volume and a small weight and facilitates the installation and replacement of the desulfurizing agent. Alternatively, a plurality of desulfurization units can be used in a combined manner, and according to different catalysts and use requirements, a different number of desulfurization units are connected in series and quickly assembled to increase the volume of the desulfurizing agent and achieve the desulfurization effect. Further, the desulfurization unit can also be fixed on the side wall of the vehicle environment compartment conveniently. Compared with a cylindrical desulfurization tank, the desulfurization unit can effectively utilize the space and save installation space for other systems.

In one embodiment, the water inlet and the water outlet are located in the upper part and the lower part of the container 5 respectively, so as to make the best use of the heat of the circulating water. Further, the water inlet and the water outlet can be arranged on two sides of the container 5. The water inlet is in the lower part of the container 5 and the water outlet is in the upper part of the container 5.

The water inlet and the water outlet may further be provided with a circulating water ferrule-type joint 8 to facilitate connection to other components. There is no limitation to it.

Further, the foregoing adapter connected to the inner bush 3b can be a right-angle adapter 1, to further facilitate connection to other components. Further, in order to prevent particles of the desulfurizing agent from overflowing together with the gas, a filter element 1a is integrated on the right-angle connector. The filter element 1a is a sinter-type filter element to trap particles of size 0.5 µm and above.

An adapter is further arranged at the gas inlet. The adapter at the gas inlet can be a straight adapter 9. A filter element 1a can be integrated on the adapter at the gas inlet, too. The adapter at the gas inlet and the adapter connected to the inner bush 3b both can be ferrule-type adapters.

Based on the desulfurization unit provided by the foregoing embodiment, the present invention further provides an SOFC system. The SOFC system comprises any desulfurization unit provided by the foregoing embodiments. As the SOFC system adopts the desulfurization unit provided by the foregoing embodiments, the beneficial effects of the SOFC system can be seen in the foregoing embodiments.

Further, the SOFC system comprises a plurality of desulfurization units, and any two of the desulfurization units are connected in series or in parallel. A plurality of desulfurization units can be connected in series or in parallel.

The present invention further provides a vehicle. The vehicle comprises the foregoing SOFC system, so the beneficial effects of the vehicle can be seen in the foregoing embodiments.

The embodiments in the description are all described in a progressive manner, each embodiment focuses on the differences from other embodiments and the same or similar parts among the embodiments can be mutually referred to.

Various modifications to these embodiments will be apparent. The general principle defined herein can be implemented in other embodiments without departing from the scope of the present invention. Therefore, the present invention will not be limited to the embodiments provided herein.

The description with reference to the terms "one embodiment," "example," "specific example," etc. means that the specific features, structures, materials, or characteristics described in combination with the embodiment or example are included in at least one embodiment or example of the invention. The schematic representation of the above-mentioned terms herein does not necessarily refer to the same embodiment or example. Moreover, the specific features, structures, materials, or characteristics described can be combined in any one or multiple embodiments or examples in a suitable manner.

## Claims

1. A desulfurization unit of a solid oxide fuel cell (SOFC) system, comprising a container for holding a desulfurizing agent (5), wherein:
the container (5) comprises an inner wall and an outer wall, a water cavity (4) is formed between the inner wall and the outer wall;
a water inlet and a water outlet in communication with the water cavity (4) are arranged on the outer wall;
the top of the container (5) is provided with a gas outlet;
the bottom of the container (5) is provided with a gas inlet; and
a double threaded bush (3) is arranged at the gas outlet, wherein:
the double threaded bush (3) comprises an inner bush (3b) and an outer bush (3a) in a threaded engagement;
an outer wall of the outer bush (3a) is in threaded engagement with a wall of the gas outlet; and
an inner wall of the inner bush (3b) is in threaded engagement with an adapter.

2. The desulfurization unit of the SOFC system according to claim 1, wherein the bottom of the container (5) is provided with a grid plate (7), a buffer cavity is arranged under the grid plate (7) such that the gas entering from the gas inlet will flow through the buffer cavity and the grid plate (7) in turn.

3. The desulfurization unit of the SOFC system according to claim 1 or 2, wherein at least one circumferential locating pin (2) is further provided between the outer bush (3a) and the wall of the gas outlet.

4. The desulfurization unit of the SOFC system according to claim 1, 2, or 3, wherein the container (5) is rectangular.

5. The desulfurization unit of the SOFC system according to claim 4, wherein the water inlet and the water outlet are located in the upper part and the lower part of the container (5) respectively.

6. The desulfurization unit of the SOFC system according to any preceding claim, wherein the adapter is a right-angle adapter (1).

7. The desulfurization unit of the SOFC system according to claim 6, wherein a filter element (1a) is further integrated on the right-angle connector.

8. An SOFC system comprising at least one desulfurization unit according to any one of claims 1 to 7.

9. The SOFC system according to claim 8, wherein there are a plurality of desulfurization units, and any two of the desulfurization units are connected in series or parallel.

10. A vehicle, wherein the vehicle comprises the SOFC system according to any one of claims 8 to 9.

## Patentansprüche

1. Entschwefelungseinheit eines Festoxidbrennstoffzellensystems (SOFC-System), umfassend einen Behälter zum Halten eines Entschwefelungsmittels (5), wobei:
der Behälter (5) eine Innenwand und eine Außenwand umfasst, wobei ein Wasserhohlraum (4) zwischen der Innenwand und der Außenwand ausgebildet ist;
ein Wassereinlass und ein Wasserauslass in Kommunikation mit dem Wasserhohlraum (4) an der Außenwand angeordnet sind;
die Oberseite des Behälters (5) mit einem Gasauslass versehen ist;
die Unterseite des Behälters (5) mit einem Gaseinlass versehen ist; und
eine Doppelgewindebuchse (3) an dem Gasauslass angeordnet ist, wobei:
die Doppelgewindebuchse (3) eine Innenbuchse (3b) und eine Außenbuchse (3a) in einem Gewindeeingriff umfasst;
eine Außenwand der Außenbuchse (3a) mit einer Wand des Gasauslasses in Gewindeeingriff steht; und
eine Innenwand der Innenbuchse (3b) mit einem Adapter in Gewindeeingriff steht.

2. Entschwefelungseinheit des SOFC-Systems nach Anspruch 1, wobei die Unterseite des Behälters (5) mit einer Gitterplatte (7) versehen ist, wobei ein Pufferhohlraum unterhalb der Gitterplatte (7) derart angeordnet ist, dass das Gas, das von dem Gaseinlass eintritt, wiederum durch den Pufferhohlraum und die Gitterplatte (7) strömen wird.

3. Entschwefelungseinheit des SOFC-Systems nach Anspruch 1 oder 2, wobei mindestens ein umlaufender Positionierstift (2) ferner zwischen der Außenbuchse (3a) und der Wand des Gasauslasses bereitgestellt ist.

4. Entschwefelungseinheit des SOFC-Systems nach Anspruch 1, 2 oder 3, wobei der Behälter (5) rechteckig ist.

5. Entschwefelungseinheit des SOFC-Systems nach Anspruch 4, wobei der Wassereinlass und der Wasserauslass in dem oberen Teil beziehungsweise dem unteren Teil des Behälters (5) positioniert sind.

6. Entschwefelungseinheit des SOFC-Systems nach einem der vorstehenden Ansprüche, wobei der Adapter ein Rechtwinkeladapter (1) ist.

7. Entschwefelungseinheit des SOFC-Systems nach Anspruch 6, wobei ein Filterelement (1a) ferner an dem Rechtwinkelverbinder integriert ist.

8. SOFC-System, umfassend mindestens eine Entschwefelungseinheit nach einem der Ansprüche 1 bis 7.

9. SOFC-System nach Anspruch 8, wobei es eine Vielzahl von Entschwefelungseinheiten gibt und beliebige zwei der Entschwefelungseinheiten in Reihenschaltung oder Parallelschaltung verbunden sind.

10. Fahrzeug, wobei das Fahrzeug das SOFC-System nach einem der Ansprüche 8 bis 9 umfasst.

## Revendications

1. Unité de désulfuration d'un système de pile à combustible à oxyde solide (SOFC), comprenant un récipient pour contenir un agent de désulfuration (5), dans laquelle :
le récipient (5) comprend une paroi interne et une paroi externe, une cavité d'eau (4) est formée entre la paroi interne et la paroi externe ;
une entrée d'eau et une sortie d'eau en communication avec la cavité d'eau (4) sont agencées sur la paroi externe ;
le sommet du récipient (5) est pourvu d'une sortie de gaz ;
le fond du récipient (5) est pourvu d'une entrée de gaz ; et
une double douille filetée (3) est agencée au niveau de la sortie de gaz, dans laquelle :
la double douille filetée (3) comprend une douille interne (3b) et une douille externe (3a) dans une prise filetée ;
une paroi externe de la douille externe (3a) est en prise filetée avec une paroi de la sortie de gaz ; et
une paroi interne de la douille interne (3b) est en prise filetée avec un adaptateur.

2. Unité de désulfuration du système SOFC selon la revendication 1, dans laquelle le fond du récipient (5) est pourvu d'une plaque de grille (7), une cavité tampon est agencée sous la plaque de grille (7) de telle sorte que le gaz entrant depuis l'entrée de gaz s'écoule à travers la cavité tampon et la plaque de grille (7) tour à tour.

3. Unité de désulfuration du système SOFC selon la revendication 1 ou 2, dans laquelle au moins une goupille de positionnement circonférentielle (2) est en outre prévue entre la douille externe (3a) et la paroi de la sortie de gaz.

4. Unité de désulfuration du système SOFC selon la revendication 1, 2 ou 3, dans laquelle le récipient (5) est rectangulaire.

5. Unité de désulfuration du système SOFC selon la revendication 4, dans laquelle l'entrée d'eau et la sortie d'eau sont situées dans la partie supérieure et la partie inférieure du récipient (5) respectivement.

6. Unité de désulfuration du système SOFC selon l'une quelconque revendication précédente, dans laquelle l'adaptateur est un adaptateur à angle droit (1).

7. Unité de désulfuration du système SOFC selon la revendication 6, dans laquelle un élément filtrant (1a) est en outre intégré sur le raccord à angle droit.

8. Système SOFC comprenant au moins une unité de désulfuration selon l'une quelconque des revendications 1 à 7.

9. Système SOFC selon la revendication 8, dans lequel il y a une pluralité d'unités de désulfuration, et deux quelconques des unités de désulfuration sont raccordées en série ou en parallèle.

10. Véhicule, dans lequel le véhicule comprend le système SOFC selon l'une quelconque des revendications 8 à 9.
